# EUROPÄISCHE PATENTSCHRIFT

(11) **EP 3 320 196 B1**
(45) Veröffentlichungstag und Bekanntmachung des Hinweises auf die Patenterteilung: **27.11.2019**
(21) Anmeldenummer: 16734308.6
(22) Anmeldetag: 29.06.2016
(51) Int. Cl.: F01N 3/20, B01J 35/00, B01J 12/00

(54) **ELEKTRISCH BEHEIZBARER WABENKÖRPER MIT LAGENPAKETKONTAKTIERUNG**
ELECTRICALLY HEATABLE HONEYCOMB BODY WITH LAYER PACKET CONTACTING
CORPS EN NID D'ABEILLES POUVANT ÊTRE CHAUFFÉ ÉLECTRIQUEMENT AVEC INTERCONNEXION ÉLECTRIQUE DE MODULES MULTICOUCHES

(30) Priorität: 07.07.2015 DE 102015212705
(43) Veröffentlichungstag der Anmeldung: 16.05.2018
(73) Patentinhaber: CPT Group GmbH, 30165 Hannover (DE)
(72) Erfinder: HIRTH, Peter, 51503 Rösrath (DE); HÄRIG, Thomas, 53819 Neunkirchen-Seelscheid (DE)
(86) Internationale Anmeldenummer: PCT/EP2016/065181
(87) Internationale Veröffentlichungsnummer: WO 2017/005579

(56) Entgegenhaltungen:
- EP-A2- 0 882 874
- WO-A1-89/10471
- DE-A1- 19 512 097

## Beschreibung

Die vorliegende Erfindung liegt auf dem Gebiet der elektrisch beheizbaren Wabenkörper, insbesondere für Abgasbehandlungssysteme von Verbrennungsmotoren, vorzugsweise in Kraftfahrzeugen. Elektrisch beheizbare Wabenkörper werden beispielsweise benötigt, um Komponenten und/oder Fluide in einem Abgasreinigungssystem zu heizen, um dadurch eine bestimmte Mindesttemperatur für bestimmte chemische Reaktionen, insbesondere auch für katalytisch aktivierte Reaktionen, zu erreichen oder aufrechtzuerhalten. Dies findet beispielsweise bei Abgaskatalysatoren, Partikelfiltern und/oder Anlagen zur Reduzierung von Stickoxiden Anwendung.

Eine typische Bauform eines solchen elektrisch beheizbaren Wabenkörpers ist z. B. in der WO 96/10127 beschrieben. Auch die EP 1 967 712 zeigt den Aufbau eines elektrisch beheizbaren Wabenkörpers. In beiden Schriften ist die Möglichkeit dargestellt, einen solchen elektrisch beheizbaren Wabenkörper an einem benachbart angeordneten Wabenkörper (elektrisch isoliert) abzustützen. Auch die EP 0882874 A2 bildet einen Stand der Technik.

Um einen für eine elektrische Beheizung genügend hohen Ohm'schen Widerstand bereitstellen zu können, umfassen solche elektrisch beheizbaren Wabenkörper mindestens einen Stapel von mehreren Blechlagen (z. B. Folien), die so strukturiert sind, dass sie für ein Fluid (insbesondere Gas), in einer axialen Richtung, durchströmbare Kanäle bilden. Typischerweise werden dafür grob strukturierte Bleche, sowie fein strukturierte und/oder glatte Bleche abwechselnd aufeinander geschichtet. Bevorzugt werden die Blechlagen innerhalb eines Stapels an einigen (ausgewählten) oder allen Berührungspunkten miteinander verlötet bzw. durch Diffusionsanbindungen aneinander befestigt.

Durch gegensinniges Verschlingen des Stapels nach Art einer S-Form, einer U-Form oder dergleichen wird dieser Stapel so geformt, dass er einen runden oder ovalen Querschnitt ausfüllt, wobei benachbarte Windungen des Stapels elektrisch voneinander isoliert sein müssen.

Aus der US 5,322,672 ist ein elektrisch beheizbarer Wabenkörper bekannt, bei dem die Stapel von Blechlagen/Folien mäanderförmig angeordnet sind. Diese Anordnung ist insbesondere für Wabenkörper mit unrunden oder nicht-ovalen Querschnitten geeignet, also z. B. mit rechteckigen Querschnitten.

Bei dieser Ausführungsform sind bei jeder Richtungsumkehr bzw. Faltung des Stapels Einschnürungen vorgesehen. Im Bereich dieser Einschnürungen liegen die Folien glatt aufeinander bzw. weisen keinerlei Strukturierung auf. Die Herstellung solcher Stapel von Folien ist jedoch aufwändig, wobei Beschädigungen der Folien bei der Faltung der Stapel dennoch auftreten können.

Ausgehend hiervon ist es Aufgabe der vorliegenden Erfindung, die im Zusammenhang mit dem Stand der Technik geschilderten technischen Probleme zumindest teilweise zu lösen. Insbesondere soll eine Verbindung von Lagenpaketen angegeben werden, die einfach und reproduzierbar herstellbar ist, wobei weiterhin eine flexible Anpassung an verschiedene Querschnitte eines Wabenkörpers ermöglicht werden sollte.

Diese Aufgaben werden gelöst mit einer Verbindung gemäß den Merkmalen des Patentanspruchs 1. Weitere vorteilhafte Ausgestaltungen der Erfindung sind in den jeweils abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Hierzu trägt eine elektrisch leitende Verbindung zwischen mindestens zwei elektrisch leitenden Stapeln von zumindest teilweise strukturierten, metallischen Blechlagen/Folien bei, die eine Vielzahl von für ein Fluid durchströmbare Kanäle bilden. Diese Verbindung umfasst mindestens ein elektrisch leitendes Stangenelement, das die mindestens zwei Stapel durchdringt, wobei auf dem mindestens einen Stangenelement und zwischen den mindestens zwei Stapeln ein Distanzelement angeordnet ist, durch das die zwei Stapel voneinander beabstandet angeordnet sind. Weiter ist eine Anordnung vorgesehen, welche die mindestens zwei Stapel, das mindestens eine Stangenelement und das Distanzelement umfasst und durch mindestens ein Spannelement verspannt ist .

Diese elektrisch leitende Verbindung ermöglicht es, dass anstatt eines einzelnen, mäanderförmige verlaufenden Stapels mit Einschnürungen nun eine Mehrzahl von z. B. geradlinig verlaufenden, aufeinander gestapelten, Stapeln von Folien über ein Stangenelement elektrisch leitend verbunden sind. Diese elektrisch leitende Verbindung ermöglicht es, dass lokale Widerstandssprünge, die z. B. gerade an Faltungen eines Stapels auftreten können (der elektrische Strom fließt bevorzugt entlang der "inneren Folien" - also entlang des "kürzesten" Weges, bzw. entlang des Weges mit dem geringsten elektrischen Widerstand), und damit entstehende "Hot Spots" (lokale Heißstellen) verhindert werden.

Insbesondere ist das Stangenelement ein massiver Abstandshalter, der insbesondere die Enden der Stapel durchdringt und diese elektrisch leitend verbindet.

Die elektrische Verbindung stellt einen dauerhaft niedrigen Wert des elektrischen Widerstands [Ohm] der Verbindung sicher. Weiterhin wird eine homogene Temperaturverteilung bei der elektrischen Aufheizung des Wabenkörpers sichergestellt, da so genannte "hot spots" z. B. an den sonst vorliegenden Faltungen der Stapel nicht auftreten.

Insbesondere ist das mindestens eine Stangenelement quer zu einem Verlauf der Kanäle und quer zu einer Fläche des jeweiligen Stapels angeordnet.

Bevorzugt weist zumindest ein Stapel mindestens ein Ende auf und das Stangenelement durchdringt den Stapel im Bereich des Endes. Insbesondere sind alle Stapel über ihre jeweiligen Enden mit benachbart angeordneten Stapeln über eine Verbindung verbunden.

Erfindungsgemäß ist das Distanzelement durch einen Flansch des Stangenelements gebildet, wobei die zwei Stapel durch den Flansch voneinander beabstandet angeordnet sind. Insbesondere ist das Distanzelement also einstückig mit dem Stangenelement ausgeformt (z. B. ein gestufter Bolzen).

Insbesondere liegen die Folien eines Stapels in direkter Umgebung des Stangenelements im Wesentlichen spaltfrei aneinander. Insbesondere sind die Folien zumindest in dieser direkten Umgebung des Stangenelements nicht strukturiert ausgeführt oder werden durch die Verspannung der Anordnung so zusammengedrückt, dass sie im Wesentlichen spaltfrei aneinanderliegen. Bevorzugt weisen das mindestens eine Stangenelement und das Distanzelement zusammen einen elektrischen Widerstand [Ohm] gegenüber einem die Anordnung durchströmenden elektrischen Strom [Ampere] auf, der höchstens 20 % des elektrischen Widerstands [Ohm] eines jeden Stapels aufweist. Ganz besonderes bevorzugt ist, dass der das mindestens eine Stangenelement und das Distanzelement zusammen einen elektrischen Widerstand von maximal 10 % oder sogar nur maximal 5 % des elektrischen Widerstands eines jeden Stapels beträgt. Beispielsweise haben das mindestens eine Stangenelement und das Distanzelement zusammen einen elektrischen Widerstand im Bereich von ca. 500 pOhm (Mikro-Ohm). Beispielsweise hat ein Stapel einen elektrischen Widerstand von 10 mOhm (Milli-Ohm) bis 1 Ohm. Der hier betrachtete Stapel ist insbesondere der längste angebundene bzw. elektrisch kontaktierte Stapel, wenn verschieden lange Stapel eingesetzt werden. Der elektrische Widerstand bei einem Stapel wird entlang des gewünschten Stromflusses bestimmt, also insbesondere in Richtung dessen Länge.

Insbesondere ist das mindestens eine Spannelement durch eine Umbördelung des Stangenelements gebildet (z. B. in Art eines Nietes).

Insbesondere bilden das Stangenelement und das mindestens eine Spannelement eine Schraube-Mutter-Einheit. Bevorzugt ist das Stangenelement mit einem Außengewinde (Schraube) ausgeführt und das Spannelement mit einem Innengewinde (Mutter).

Insbesondere ist mindestens ein Spannelement ein Bügel, der mit einer Nut des Stangenelements zusammenwirkt.

Insbesondere bilden das Stangenelement und das mindestens eine Spannelement oder das Distanzelement und das mindestens eine Spannelement eine Bohrung-Stift-Einheit, wobei als Stift insbesondere ein Zylinderstift, Kegelstift, Kerbstift oder Spannstift eingesetzt ist. Bevorzugt weist das Distanzelement eine Bohrung auf, in die ein Stift des Spannelements eingreift (auch umgekehrt möglich). Der Stift des Spannelements bildet in diesem Fall das Stangenelement, das einen Stapel durchdringt.

Die technische Lösung umfasst weiter einen Wabenkörper mit einem für ein Fluid (Abgas) durchströmbaren Querschnitt, der durch mehrere nebeneinander angeordnete Stapel gebildet ist, wobei jeweils benachbart angeordnete Stapel an ihren Enden über eine erfindungsgemäße Verbindung mit jeweils mindestens einem Stangenelement elektrisch leitend miteinander verbunden sind, so dass ein mäanderförmig verlaufender elektrischer Strompfad durch die Stapel und das mindestens eine Stangenelement hindurch gebildet ist.

Insbesondere sind benachbart zueinander angeordnete Stapel nur über mindestens ein Stangenelement elektrisch leitend miteinander verbunden und sonst durch jeweils einen Luftspalt voneinander getrennt und damit elektrisch isoliert angeordnet. Bevorzugt erstrecken sich die Stapel im Wesentlichen geradlinig. Insbesondere ist der durch die nebeneinander angeordneten Stapel gebildete Querschnitt des Wabenkörpers im Wesentlichen rechteckig.

Nach einem weiteren Aspekt wird auch ein Kraftfahrzeug offenbart, zumindest aufweisend eine Verbrennungskraftmaschine und ein Abgasbehandlungssystem zur Behandlung eines Abgases der Verbrennungskraftmaschine, wobei das Abgasbehandlungssystem mindestens einen Wabenkörper gemäß der oben beschriebenen technischen Lösung aufweist.

Die vorgeschlagene technische Lösung, sowie das technische Umfeld werden nachfolgend anhand der Figuren näher erläutert . Die Figuren zeigen besonders bevorzugte Ausführungsbeispiele, auf die die technische Lösung jedoch nicht begrenzt ist. Insbesondere ist darauf hinzuweisen, dass die Figuren und insbesondere die dargestellten Größenverhältnisse nur schematisch sind. Gleiche Bezugszeichen in den Figuren zeigen gleiche Gegenstände. Es zeigen schematisch:
- Fig. 1: einen Wabenkörper gemäß der US 5,322,672;
- Fig. 2: zwei Stapel, die durch eine Verbindung miteinander elektrisch leitend verbunden sind;
- Fig. 3: ein Stangenelement mit einer Nut;
- Fig. 4: einen Bügel als Spannelement;
- Fig. 5: eine Anordnung mit einer Verbindung umfassend ein Stangenelement und Bügel als Spannelemente;
- Fig. 6: ein Spannelement in der Ausführung als Kerbstift;
- Fig. 7: eine nicht erfindungsgemäße Anordnung mit einer Verbindung umfassend zwei Spannelemente gemäß Fig. 6 und einem Distanzelement;
- Fig. 8: ein Stangenelement mit Ausführung als Niet;
- Fig. 9: eine Verbindung mit einem Stangenelement gemäß Fig. 8 und einer Scheibe; und

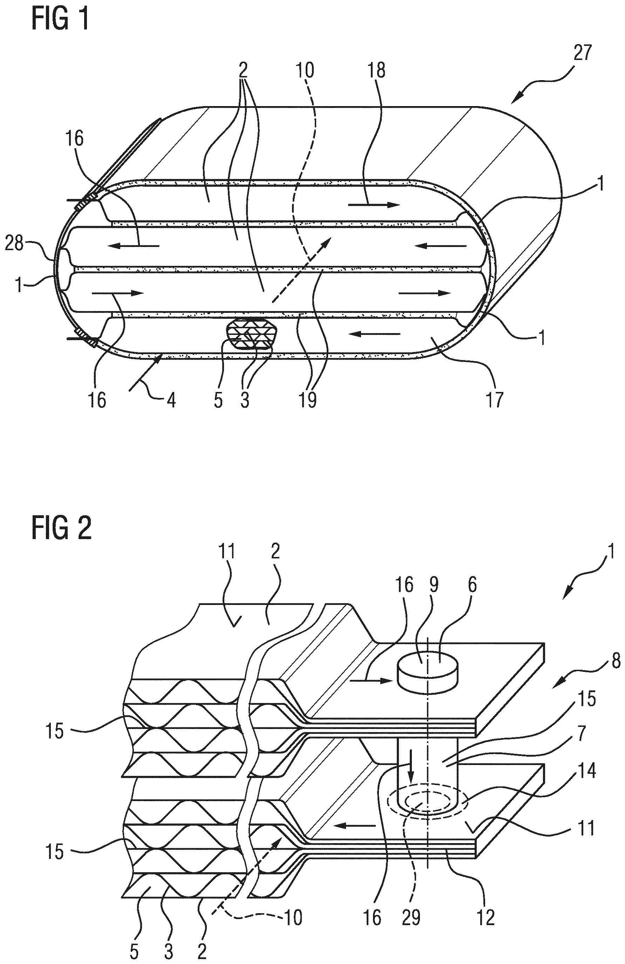

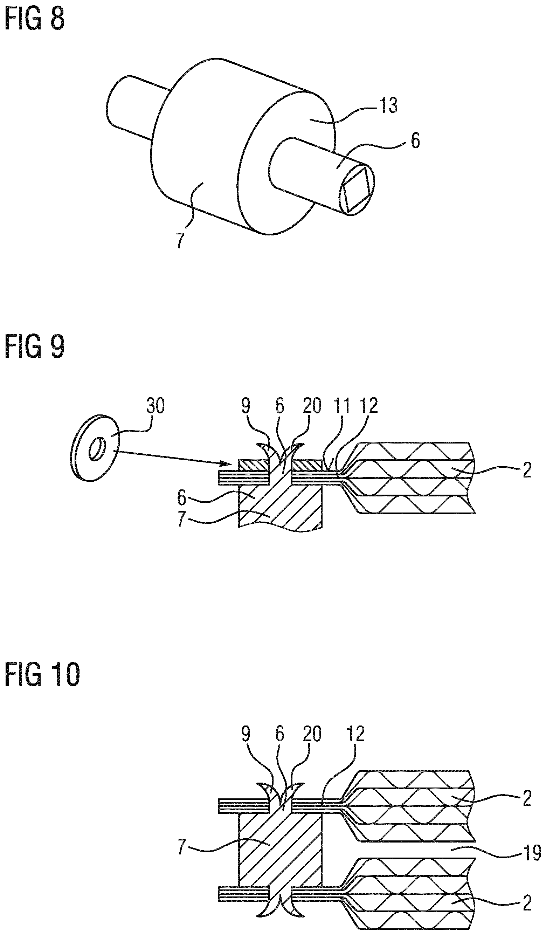

Fig. 10 eine Anordnung mit einem Stangenelement gemäß Fig. 8. Fig. 1 zeigt einen bekannten Wabenkörper 27 gemäß der US 5,322,672 mit einem für ein Fluid 4 (Abgas) durchströmbaren Querschnitt 17, der durch mehrere nebeneinander angeordnete Stapel 2 von Folien 3 gebildet ist, wobei jeweils benachbart angeordnete Stapel 2 über Einschnürungen 28 als Verbindungen 1 elektrisch leitend miteinander verbunden sind, so dass ein elektrischer Strom 16 entlang eines mäanderförmig verlaufenden elektrischen Strompfades 18 durch die Stapel 2 geleitet wird. Im Bereich der Einschnürungen 28 sind die strukturieren Folien 3 so zusammengedrückt, dass sie flach aneinander liegen. Der Wabenkörper 27 ist durch einen einzigen Stapel 2 aus Folien 3 gebildet, wobei die Einschnürungen 28 erzeugt wurden, um den geforderten Querschnitt 17 des Wabenkörpers 27 durch Faltungen der Folien 3 herzustellen. Die nun aufeinanderliegenden Stapel 2 sind jeweils z. B. durch Luftspalte 19 (oder isolierende Beschichtungen oder isolierende Schichten) beabstandet. Die Stapel 2 werden durch glatte und strukturierte Folien 3 gebildet, die eine Vielzahl von für ein Fluid 4 durchströmbare Kanäle 5 bilden.

Anstatt der Einschnürungen 28 wir nun hier vorgeschlagen, eine elektrisch leitende Verbindung 1 einzusetzen, die mit Hilfe der nachfolgenden Figuren veranschaulicht wird.

Fig. 2 zeigt zwei Stapel 2, die durch eine Verbindung 1 miteinander elektrisch leitend verbunden sind. Die elektrisch leitende Verbindung 1 verbindet zwei elektrisch leitende Stapel 2, die zumindest teilweise strukturierte, metallische Folien 3 aufweisen. Die Folien 3 bilden eine Vielzahl von für ein Fluid 4 durchströmbare Kanäle 5. Die Verbindung 1 umfasst mindestens ein elektrisch leitendes Stangenelement 6, das die mindestens zwei Stapel 2 durchdringt, wobei auf dem Stangenelement 6 und zwischen den mindestens zwei Stapeln 2 ein Distanzelement 7 angeordnet ist, durch das die zwei Stapel 2 voneinander beabstandet angeordnet sind. Eine Anordnung 8, umfassend die mindestens zwei Stapel 2, das Stangenelement 6 und das Distanzelement 7 ist durch mindestens ein Spannelement 9 verspannt.

Das Stangenelement 6 ist hier quer zu einem Verlauf 10 der Kanäle 5 und quer zu einer Fläche 11 des jeweiligen Stapels 2 angeordnet ist. Das Stangenelement 6 durchdringt den Stapel 2 im Bereich des Endes 12. Dafür weist das Ende 12 des Stapels 2 (also die Folien 3) eine Öffnung 29 auf, durch die sich das Stangenelement 6 erstreckt.

Die Folien 3 des Stapels 2 liegen in direkter Umgebung 14 des Stangenelements 6 im Wesentlichen spaltfrei aneinander.

Das Stangenelement 6 und das Distanzelement 7 weisen zusammen einen elektrischen Widerstand 15 gegenüber einem die Anordnung 8 durchströmenden elektrischen Strom 16 auf, der höchstens 20 % des elektrischen Widerstands 15 eines jeden Stapels 2 beträgt.

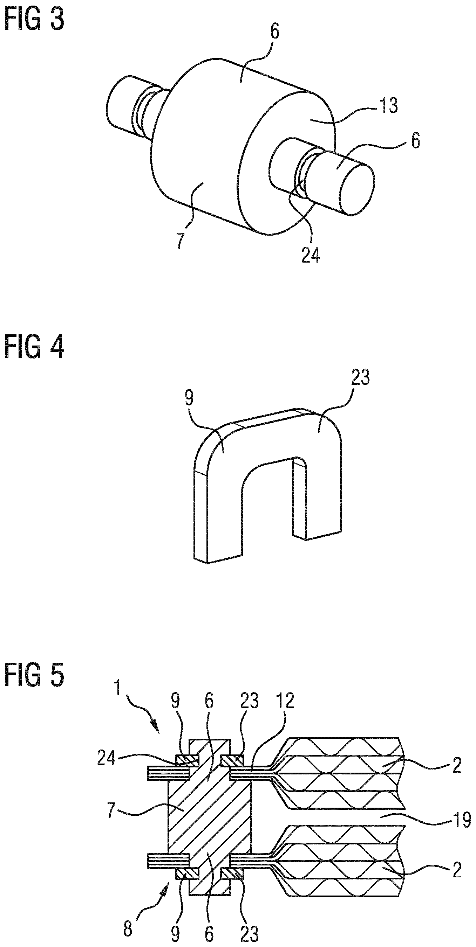

Fig. 3 zeigt ein Stangenelement 6 mit einer Nut 24. Das Stangenelement 6 bildet mit einem Flansch 13 das Distanzelement 7.

Fig. 4 zeigt einen Bügel 23 als Spannelement 9.

Fig. 5 zeigt eine Anordnung 8 mit einer Verbindung 1 umfassend ein Stangenelement 6 und Bügel 23 als Spannelemente 9 entsprechend Fig. 3 und 4. Die Folien 3 im Bereich der Enden 12 der Stapel 2 werden zusammengedrückt und die Anordnung 8 durch die in die Nuten 24 eingeschobenen Bügel 23 verspannt.

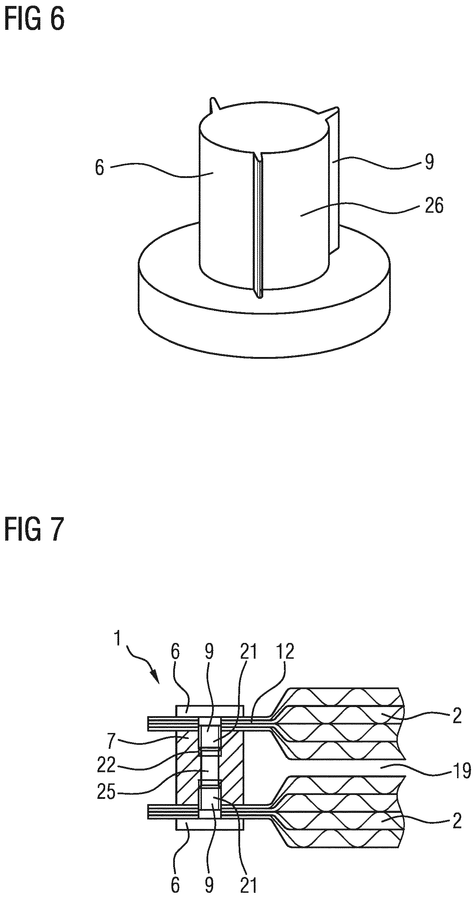

Fig. 6 zeigt ein Spannelement 9 als Stift 26, hier in der Ausführung als Kerbstift.

Fig. 7 zeigt eine Anordnung 8 mit einer Verbindung 1 umfassend zwei Spannelemente 9 gemäß Fig. 6 als Stangenelemente 6 und einem Distanzelement 7. Die Folien 3 im Bereich der Enden 12 der Stapel 2 werden zusammengedrückt und die Anordnung 8 durch die in die Bohrung 25 eingeschobenen Stifte 26 der Spannelemente 9 verspannt. Die Stifte 26 bilden hier die Stangenelemente 6.

Anhand von Fig. 7 kann ebenfalls eine Anordnung 8 mit einer Verbindung 1 erläutert werden, bei der das Distanzelement 7 und das mindestens eine Spannelement 9 eine Schraube 21-Mutter 22-Einheit bilden. Hier weist das Distanzelement 7 eine Bohrung 25 auf mit jeweils einem Innengewinde (Mutter 22) für das als Schraube 21 ausgeführte Spannelement 9. Auch hier bilden die Spannelemente 9 die Stangenelemente 6.

Fig. 8 zeigt ein Stangenelement 6 in der Ausführung als Niet. Das Stangenelement 6 bildet mit einem Flansch 13 das Distanzelement 7.

Fig. 9 zeigt eine Verbindung 1 mit einem Stangenelement 6 gemäß Fig. 8 und einer Scheibe 30. Das Spannelement 9 wird durch eine Umbördelung 20 des Stangenelements 6 gebildet. Die Umbördelung 20 drückt die Scheiben 30 gegen die Fläche 11 des Stapels 2 im Bereich des Endes 12. Die Folien 3 im Bereich der Enden 12 des Stapels 2 werden so zusammengedrückt und die Anordnung 8 so verspannt.

Fig. 10 zeigt die Anordnung 8 gemäß Fig. 8 und 9 nur ohne Verwendung einer Scheibe 30. Die Folien 3 im Bereich der Enden 12 der Stapel 2 werden durch die Umbördelung 20 zusammengedrückt und die Anordnung 8 so verspannt.

## Patentansprüche

1. Wabenkörper aufweisend eine elektrisch leitende Verbindung (1) zwischen mindestens zwei elektrisch leitenden Stapeln (2) von zumindest teilweise strukturierten, metallischen Folien (3), die eine Vielzahl von für ein Fluid (4) durchströmbare Kanäle (5) bilden, umfassend mindestens ein elektrisch leitendes Stangenelement (6), das die mindestens zwei Stapel (2) durchdringt, wobei auf dem Stangenelement (6) und zwischen den mindestens zwei Stapeln (2) ein Distanzelement (7) angeordnet ist, durch das die zwei Stapel (2) voneinander beabstandet angeordnet sind; wobei eine Anordnung (8), umfassend die mindestens zwei Stapel (2), das Stangenelement (6) und das Distanzelement (7), durch mindestens ein Spannelement (9) verspannt ist, **dadurch gekennzeichnet, dass** das Distanzelement (7) durch einen Flansch (13) des Stangenelements (6) gebildet ist, wobei die zwei Stapel (2) durch den Flansch (13) voneinander beabstandet angeordnet sind.

2. Wabenkörper mit einer Verbindung (1) nach Patentanspruch 1, wobei das mindestens eine Stangenelement (6) quer zu einem Verlauf (10) der Kanäle (5) und quer zu einer Fläche (11) des jeweiligen Stapels (2) angeordnet ist.

3. Wabenkörper mit einer Verbindung (1) nach einem der vorhergehenden Patentansprüche, wobei zumindest ein Stapel (2) mindestens ein Ende (12) aufweist und das Stangenelement (6) den Stapel (2) im Bereich des Endes (12) durchdringt.

4. Wabenkörper mit einer Verbindung (1) nach einem der vorhergehenden Patentansprüche, wobei das mindestens eine Stangenelement (6) und das Distanzelement (7) zusammen einen elektrischen Widerstand (15) gegenüber einem die Anordnung (8) durchströmenden elektrischen Strom (16) aufweisen, der höchstens 20 % des elektrischen Widerstands (15) eines jeden Stapels (2) beträgt.

5. Wabenkörper mit einer Verbindung (1) nach einem der vorhergehenden Patentansprüche, wobei das mindestens eine Spannelement (9) durch eine Umbördelung (20) des Stangenelements (6) gebildet ist.

6. Wabenkörper mit einer Verbindung (1) nach einem der Patentansprüche 1 bis 5, wobei das mindestens eine Spannelement (9) ein Bügel (23) ist, der mit einer Nut (24) des Stangenelements (6) zusammenwirkt.

7. Wabenkörper (27) mit einem für ein Fluid (4) durchströmbaren Querschnitt (17), der durch mehrere nebeneinander angeordnete Stapel (2) gebildet ist, wobei jeweils benachbart angeordnete Stapel (2) an ihren Enden (12) über eine Verbindung nach einem der vorhergehenden Patentansprüche mit jeweils mindestens einem Stangenelement (6) elektrisch leitend miteinander verbunden sind, so dass ein mäanderförmig verlaufender elektrischer Strompfad (18) durch die Stapel (2) und das mindestens eine Stangenelement (6) hindurch gebildet ist.

## Claims

1. Honeycomb body having an electrically conductive connection (1) between at least two electrically conductive stacks (2) of at least partially structured, metal foils (3) which form a large number of channels (5) through which a fluid (4) can flow, comprising at least one electrically conductive rod element (6) which passes through the at least two stacks (2), wherein a spacer element (7) is arranged on the rod element (6) and between the at least two stacks (2), the two stacks (2) being arranged at a distance from one another by said spacer element; wherein an arrangement (8) comprising the at least two stacks (2), the rod element (6) and the spacer element (7) is clamped by at least one clamping element (9), **characterized in that** the spacer element (7) is formed by a flange (13) of the rod element (6), wherein the two stacks (2) are arranged at a distance from one another by the flange (13).

2. Honeycomb body with a connection (1) according to Claim 1, wherein the at least one rod element (6) is arranged transverse to a profile (10) of the channels (5) and transverse to a surface (11) of the respective stack (2).

3. Honeycomb body with a connection (1) according to either of the preceding claims, wherein at least one stack (2) has at least one end (12) and the rod element (6) passes through the stack (2) in the region of the end (12).

4. Honeycomb body with a connection (1) according to one of the preceding claims, wherein the at least one rod element (6) and the spacer element (7) together have an electrical resistance (15) to an electric current (16) which flows through the arrangement (8), said electrical resistance being at most 20% of the electrical resistance (15) of any stack (2).

5. Honeycomb body with a connection (1) according to one of the preceding claims, wherein the at least one clamping element (9) is formed by a beading (20) of the rod element (6).

6. Honeycomb body with a connection (1) according to one of Claims 1 to 5, wherein the at least one clamping element (9) is a clip (23) which interacts with a groove (24) in the rod element (6).

7. Honeycomb body (27) with a cross section (17) through which a fluid (4) can flow and which is formed by a plurality of stacks (2) which are arranged next to one another, wherein stacks (2) which are arranged respectively adjacent to one another are electrically conductively connected to one another at their ends (12) by means of a connection according to one of the preceding claims to in each case at least one rod element (6), so that an electrical current path (18) which runs in a meandering manner is formed through the stacks (2) and the at least one rod element (6).

## Revendications

1. Corps en nid d'abeilles comportant une liaison électriquement conductrice (1) entre au moins deux empilements (2) électriquement conducteurs de feuillards métalliques (3) au moins partiellement structurés, qui forment une pluralité de canaux (5) à travers lesquels un fluide (4) peut circuler, comprenant au moins un élément en forme de barre (6) électriquement conducteur qui passe à travers lesdits au moins deux empilements (2), dans lequel un élément d'espacement (7) est disposé sur l'élément en forme de barre (6) et entre lesdits au moins deux empilements (2), au moyen duquel les deux empilements (2) sont disposés de manière séparée l'un de l'autre ; dans lequel un ensemble (8) comprenant lesdits au moins deux empilements (2), l'élément en forme de barre (6) et l'élément d'espacement (7) est assujetti au moyen d'au moins un élément d'assujettissement (9), **caractérisé en ce que** ledit élément d'espacement (7) est formé par une bride (13) de l'élément en forme de barre (6), dans lequel les deux empilements (2) sont disposés de manière espacée de l'autre par la bride (13) .

2. Corps en nid d'abeilles comportant une liaison (1) selon la revendication 1, dans lequel ledit au moins un élément en forme de barre (6) est disposé transversalement à une rangée (10) des canaux (5) et transversalement à une surface (11) de l'empilement (2) respectif.

3. Corps en nid d'abeilles comportant une liaison (1) selon l'une des revendications de précédentes, dans lequel au moins un empilement (2) comporte au moins une extrémité (12) et l'élément en forme de barre (6) passe à travers l'empilement (2) dans la zone de l'extrémité (12).

4. Corps en nid d'abeilles comportant une liaison (1) selon l'une des revendications précédentes, dans lequel ledit au moins un élément en forme de barre (6) et l'élément d'espacement (7) présentent ensemble une résistance électrique (15), vis-à-vis d'un courant électrique (16) passant à travers l'ensemble (8), qui est d'au plus 20% de la résistance électrique (15) de chaque empilement (2).

5. Corps en nid d'abeilles comportant une liaison (1) selon l'une des revendications précédentes, dans lequel ledit au moins un élément d'assujettissement (9) est formé par un bourrelet (20) de l'élément en forme de barre (6).

6. Corps en nid d'abeilles comportant une liaison (1) selon l'une des revendications 1 à 5, dans lequel ledit au moins un élément d'assujettissement (9) est un étrier (23) qui coopère avec une rainure (24) de l'élément en forme de barre (6).

7. Corps en nid d'abeilles (27) ayant une section transversale (17) à travers laquelle un fluide (4) peut circuler et qui est formé par plusieurs empilements (2) disposés côte à côte, dans lequel des empilements (2) voisins sont respectivement reliés électriquement les uns aux autres de manière électriquement conductrice au niveau de leurs extrémités (12) par l'intermédiaire d'une liaison selon l'une des revendications précédentes à au moins un élément en forme de barre (6), de manière à former un trajet de courant électrique (18) sinueux passant à travers les empilements (2) et ledit au moins un élément en forme de barre (6).
